# EUROPEAN PATENT APPLICATION

(11) **EP 4 694 238 A1**
(43) Date of publication of application: **11.02.2026**
(21) Application number: 23929537.1
(22) Date of filing: 31.03.2023
(51) Int. Cl.: H04W 8/14

(54) **INFORMATION PROCESSING METHOD, APPARATUS AND SYSTEM, AND COMMUNICATION DEVICE AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Dehns Germany Partnerschaft mbB
(86) International application number: PCT/CN2023/085805
(87) International publication number: WO 2024/197954

(57) **Abstract**

The embodiments of the present disclosure relate to an information processing method, apparatus and system, and a communication device and a storage medium. The information processing method, which is executed by a first network element, comprises: receiving a first request sent by a second network element, wherein the first request comprises a first identifier of a PIN and PIN policy data, so as to realize PIN policy data for providing the PIN for a fourth network element by means of the second network element, thereby facilitating elements in the PIN in updating the PIN policy data.

## Description

### TECHNICAL FIELD

The disclosure relates to the field of communication technology, in particular to an information processing method, apparatus, and system, a communication device and a storage medium.

### BACKGROUND

As continuous development of wireless communication technology, various networks may realize more and more functions. For example, networks such as a personal Internet of Things network (PIN) may realize more and more functions.

### SUMMARY

The present disclosure provides an information processing method, apparatus, and system, a communication device and a storage medium.

In a first aspect, embodiments of the present disclosure provide an information processing method. The method is performed by a first network element and includes: receiving a first request sent by a second network element, in which, the first request includes a first identifier of a PIN and PIN policy data.

In a second aspect, embodiments of the present disclosure provide an information processing method. The method is performed by a second network element and includes: sending a first request to a first network element, in which, the first request includes a first identifier of a PIN and PIN policy data.

In a third aspect, embodiments of the present disclosure provide an information processing method. The method is performed by a third network element and includes: receiving a second request sent by a first network element, in which, the second request includes a first identifier of a PIN; and the second request is used to request a second identifier of the PIN.

In a fourth aspect, embodiments of the present disclosure provide an information processing method. The method is performed by a fourth network element and includes: receiving a third request sent by a first network element, in which, the third request includes at least one of: PIN policy data; a third identifier; or PIN policy data corresponding to the third identifier.

In a fifth aspect, embodiments of the present disclosure provide an information processing method. The method is performed by an information processing system including a first network element and a second network element. The method includes: sending, by the second network element, a first request to the first network element, in which, the first request includes a first identifier of a PIN and PIN policy data.

In a sixth aspect, embodiments of the present disclosure provide an information processing method. The method is performed by a core network device and includes: receiving a first request sent by a second network element, in which, the first request includes a first identifier of a PIN and PIN policy data.

In a seventh aspect, embodiments of the present disclosure provide a first information processing apparatus. The apparatus includes a first receiving module, configured to receive a first request sent by a second network element, in which, the first request includes a first identifier of a PIN and PIN policy data.

In an eighth aspect, embodiments of the present disclosure provide a second information processing apparatus. The apparatus includes a second sending module, configured to send a first request to a first network element, in which, the first request includes a first identifier of a PIN and PIN policy data.

In a ninth aspect, embodiments of the present disclosure provide a third information processing apparatus. The apparatus includes a third receiving module, configured to receive a second request sent by a first network element, in which, the second request includes a first identifier of a PIN, and the second request is used to request a second identifier of the PIN.

In a tenth aspect, embodiments of the present disclosure provide a fourth information processing apparatus. The apparatus includes a fourth receiving module, configured to receive a third request sent by a first network element, in which, the third request includes at least one of: PIN policy data; a third identifier; or PIN policy data corresponding to the third identifier.

In an eleventh aspect, embodiments of the present disclosure provide a communication device. The communication device includes one or more processors. The processor is configured to call computer instructions to enable the communication device to perform the information processing method as described in the first aspect, the second aspect, the third aspect, the fourth aspect, the fifth aspect, the sixth aspect, or optional implementations of the first aspect, the second aspect, the third aspect, the fourth aspect, the fifth aspect and the sixth aspect.

In a twelfth aspect, embodiments of the present disclosure provide an information processing system. The system includes a first network element, a second network element, a third network element and a fourth network element. The first network element is configured to implement the information processing method as described in the optional implementation of the first aspect, the second network element is configured to implement the information processing method as described in the optional implementation of the second aspect, the third network element is configured to implement the information processing method as described in the optional implementation of the third aspect, and the fourth network element is configured to implement the information processing method as described in the optional implementation of the fourth aspect.

In a thirteenth aspect, embodiments of the present disclosure provide a storage medium having instructions stored thereon. When the instructions are performed on a communication device, the communication device is caused to perform the information processing method as described in the first aspect, the second aspect, the third aspect, the fourth aspect, the fifth aspect, the sixth aspect, or optional implementations of the first aspect, the second aspect, the third aspect, the fourth aspect, the fifth aspect and the sixth aspect.

### BRIEF DESCRIPTION OF THE DRAWINGS

In order to more clearly illustrate the technical solution in the embodiments of the present disclosure, the accompanying drawings required for describing the embodiments are introduced below. The following accompanying drawings are only some embodiments of the present disclosure and do not limit the scope of protection of the present disclosure.
FIG. 1 is a structural schematic diagram of an information processing system according to an embodiment of the present disclosure.
FIG. 2a is a flowchart of a PIN pre-configuration policy according to an embodiment of the present disclosure.
FIG. 2b is a flowchart of a service request procedure of network-triggered PIN policy update according to an embodiment of the present disclosure.
FIG. 2c is a flowchart of a method for providing PIN subscription data according to an embodiment of the present disclosure.
FIG. 3 is an interactive schematic diagram of an information processing method according to an embodiment of the present disclosure.
FIG. 4a is a flowchart of an information processing method according to an embodiment of the present disclosure.
FIG. 4b is a flowchart of an information processing method according to an embodiment of the present disclosure.
FIG. 4c is a flowchart of an information processing method according to an embodiment of the present disclosure.
FIG. 5a is a flowchart of an information processing method according to an embodiment of the present disclosure.
FIG. 5b is a flowchart of an information processing method according to an embodiment of the present disclosure.
FIG. 6a is a flowchart of an information processing method according to an embodiment of the present disclosure.
FIG. 6b is a flowchart of an information processing method according to an embodiment of the present disclosure.
FIG. 7a is a flowchart of an information processing method according to an embodiment of the present disclosure.
FIG. 7b is a flowchart of an information processing method according to an embodiment of the present disclosure.
FIG. 7c is a flowchart of an information processing method according to an embodiment of the present disclosure.
FIG. 7d is a flowchart of an information processing method according to an embodiment of the present disclosure.
FIG. 8a is a flowchart of an information processing method according to an embodiment of the present disclosure.
FIG. 9a is a flowchart of an information processing method according to an embodiment of the present disclosure.
FIG. 9b is a flowchart of an information processing method according to an embodiment of the present disclosure.
FIG. 10 is an interactive schematic diagram of an information processing method according to an embodiment of the present disclosure.
FIG. 11a is a schematic diagram of a structure of an information processing apparatus according to an embodiment of the present disclosure.
FIG. 11b is a schematic diagram of a structure of an information processing apparatus according to an embodiment of the present disclosure.
FIG. 11c is a schematic diagram of a structure of an information processing apparatus according to an embodiment of the present disclosure.
FIG. 11d is a schematic diagram of a structure of an information processing apparatus according to an embodiment of the present disclosure.
FIG. 11e is a schematic diagram of a structure of an information processing apparatus according to an embodiment of the present disclosure.
FIG. 11f is a schematic diagram of a structure of an information processing apparatus according to an embodiment of the present disclosure.
FIG. 12a is a schematic diagram of a structure of a communication device according to an embodiment of the present disclosure.
FIG. 12b is a schematic diagram of a structure of a chip according to an embodiment of the present disclosure.

### DETAILED DESCRIPTION

A PIN network is required to solve the problem of providing PIN data information to a core network device.

The present disclosure provides an information processing method, apparatus, and system, a communication device and a storage medium.

In a first aspect, embodiments of the present disclosure provide an information processing method. The method is performed by a first network element and includes: receiving a first request sent by a second network element, in which, the first request includes a first identifier of a PIN and PIN policy data.

In the above embodiment, providing the PIN policy data of the PIN from the second network element to the first network element may be implemented, which is helpful for an element of the PIN to update the PIN policy data.

In combination with some embodiments of the first aspect, in some embodiments, the PIN policy data includes at least one of: a routing rule; a PIN identifier policy; a privacy policy; or a quality of service (QoS) parameter.

In the above embodiment, the second network element may configure various PIN policy data for the fourth network element, which is helpful to meet a communication requirement of an element in the PIN.

In combination with some embodiments of the first aspect, in some embodiments, the method includes: sending a second request to a third network element, in which, the second request includes the first identifier of the PIN, and the second request is used to request a second identifier of the PIN.

In the above embodiment, the first network element may request the second identifier of the PIN from the third network element, such that the second identifier of the PIN can be obtained, which is helpful for determining whether it is necessary to provide the PIN policy data of the PIN to the fourth network element.

In combination with some embodiments of the first aspect, in some embodiments, the second request includes: first information, and the first information is used to indicate determining the second identifier corresponding to the first identifier.

In the above embodiment, the second identifier matching the first identifier can be obtained, and it may accurately determine that it is necessary to provide the PIN policy data of the PIN to the fourth network element.

In combination with some embodiments of the first aspect, in some embodiments, the method includes: receiving a second response sent by the third network element, in which, the second response includes the second identifier.

In the above embodiment, with obtaining the second identifier, it may accurately determine that it is necessary to provide the PIN policy data for the PIN.

In combination with some embodiments of the first aspect, in some embodiments, the second response further includes at least one of:
one or more third identifiers of one or more PIN elements with gateway capability (PEGC) in the PIN;
one or more third identifiers of one or more PIN elements with management capability (PEMC) in the PIN; or
one or more third identifiers of one or more PIN elements (PINE) in the PIN.

In the above embodiment, with obtaining the third identifier of the element in the PIN, it may accurately determine for which element in the PIN the PIN policy data needs to be provided, which is helpful to update the PIN policy data of the element.

In combination with some embodiments of the first aspect, in some embodiments, the third identifier includes at least one of:
a generic public subscription identifier (GPSI); or
a subscriber permanent identifier (SUPI).

In the above embodiment, the element in the PIN may be identified by using multiple types of identifiers, such that the element in the PIN can be flexibly identified.

In combination with some embodiments of the first aspect, in some embodiments, the method includes: sending a third request to a fourth network element, in which, the third request includes at least one of:
the PIN policy data;
a third identifier; or
PIN policy data corresponding to the third identifier.

In the above embodiment, the PIN policy data provided by the second network element may be provided to the fourth network element by the first network element, which is helpful to update the PIN policy data. And/or, the third identifier may be provided to the fourth network element by the first network element, which is helpful to know the PIN policy data of which element needs to be updated. And/or, the PIN policy data of a part of elements in the PIN provided by the second network element may be provided to the fourth network element by the first network element, which is helpful to update the PIN policy data of these elements and can reduce a signaling overhead.

In combination with some embodiments of the first aspect, in some embodiments, the method includes: receiving a first response sent by the fourth network element, in which, the first response is used to indicate whether the PIN policy data is successfully configured.

In the above embodiment, whether the PIN policy data is configured or updated successfully can be accurately known through the first response.

In combination with some embodiments of the first aspect, in some embodiments, the method includes: sending a third response to the second network element, in which the third response is used to indicate whether the PIN policy data is successfully configured.

In the above embodiment, the second network element may be informed whether the PIN policy data in the fourth network element is configured or updated successfully.

In combination with some embodiments of the first aspect, in some embodiments, the first network element is a network exposure function (NEF); and/or the second network element is an application function (AF).

In the above embodiment, the third-party AF can provide the core network with the PIN policy data.

In combination with some embodiments of the first aspect, in some embodiments, the third network element is a unified data management (UDM).

In the above embodiment, it may request an internal identifier of the PIN in the core network from the UDM.

In combination with some embodiments of the first aspect, in some embodiments, the fourth network element is a unified data repository (UDR).

In the above embodiment, the third-party AF can provide the PIN policy data to the UDR in the core network.

In a second aspect, an embodiment of the present disclosure provides an information processing method. The method is performed by a second network element and includes: sending a first request to a first network element, in which, the first request includes a first identifier of a PIN and PIN policy data.

In combination with some embodiments of the second aspect, in some embodiments, the PIN policy data includes at least one of:
a routing rule;
a PIN identifier policy;
a privacy policy; or
a QoS parameter.

In combination with some embodiments of the second aspect, in some embodiments, the method includes: receiving a third response sent by the first network element, in which, the third response is used to indicate whether the PIN policy data is successfully configured.

In combination with some embodiments of the second aspect, in some embodiments, the first network element is a NEF; and/or the second network element is an AF.

In a third aspect, an embodiment of the present disclosure provides an information processing method. The method is performed by a third network element and includes: receiving a second request sent by a first network element, in which the second request includes a first identifier of a PIN; and the second request is used to request a second identifier of the PIN

In combination with some embodiments of the third aspect, in some embodiments, the second request includes first information, and the first information is used to indicate determining the second identifier corresponding to the first identifier.

In combination with some embodiments of the third aspect, in some embodiments, the method includes: sending a second response to the first network element, in which, the second response includes the second identifier.

In combination with some embodiments of the third aspect, in some embodiments, the second response further includes at least one of:
one or more third identifiers of one or more PEGCs in the PIN;
one or more third identifiers of one or more PEGCs in the PIN; or
one or more third identifiers of one or more PINEs in the PIN.

In combination with some embodiments of the third aspect, in some embodiments, the third identifier includes at least one of: a GPSI or a SUPI.

In combination with some embodiments of the third aspect, in some embodiments, the first network element is a NEF, and/or the third network element is a UDM.

In a fourth aspect, an embodiment of the present disclosure provides an information processing method. The method is performed by a fourth network element and includes: receiving a third request sent by a first network element, in which, the third request includes at least one of:
PIN policy data;
a third identifier; or
PIN policy data corresponding to the third identifier.

In combination with some embodiments of the fourth aspect, in some embodiments, the third identifier is at least one of:
one or more third identifiers of one or more PEGCs in the PIN;
one or more third identifiers of one or more PEGCs in the PIN; or
one or more third identifiers of one or more PINEs in the PIN.

In combination with some embodiments of the fourth aspect, in some embodiments, the method includes: sending a first response to the first network element, in which, the first response is used to indicate whether the PIN policy data is successfully configured.

In combination with some embodiments of the fourth aspect, in some embodiments, the method further includes: sending a first notification to a fifth network element, in which, the first notification includes updated PIN policy data.

In the above embodiment, the fifth network element may be notified that the PIN policy data in the fourth network element has been updated, and the updated PIN policy data can be sent to the fifth network element, which is helpful for the fifth network element to update or create the PIN policy data of the element in the PIN.

In combination with some embodiments of the fourth aspect, in some embodiments, the first network element is a NEF; and/or the fourth network element is a UDR.

In combination with some embodiments of the fourth aspect, in some embodiments, the fifth network element is a policy control function (PCF).

In the above embodiment, the PIN policy data of the element in the PIN can be updated or created through the core network device of the PCF.

In a fifth aspect, an embodiment of the present disclosure provides an information processing method. The method is performed by an information processing system, the information processing system includes a first network element and a second network element, and the method includes: sending, by the second network element, a first request to the first network element, in which, the first request comprises a first identifier of a PIN and PIN policy data.

In combination with some embodiments of the fifth aspect, in some embodiments, the information processing system further includes a third network element, and the method includes: sending, by the first network element, a second request to the third network element, in which, the second request includes the first identifier of the PIN, and the first request is used to request a second identifier of the PIN; receiving, by the first network element, a second response sent by the third network element, in which, the second response includes the second identifier.

In combination with some embodiments of the fifth aspect, in some embodiments, the second response further includes at least one of:
one or more third identifiers of one or more PEGCs in the PIN;
one or more third identifiers of one or more PEGCs in the PIN; or
one or more third identifiers of one or more PINEs in the PIN.

In combination with some embodiments of the fifth aspect, in some embodiments, the information processing system further includes a fourth network element, and the method includes: sending, by the first network element, a third request to the fourth network element, in which, the third request includes at least one of: PIN policy data, a third identifier, and PIN policy data corresponding to the third identifier; receiving, by the first network element, a first response sent by the fourth network element, in which, the first response is used to indicate whether the PIN policy data is successfully configured.

In combination with some embodiments of the fifth aspect, in some embodiments, the information processing system further includes a fifth network element, and the method further includes one of:
sending, by the first network element, a third response to the second network element, in which, the third response is used to indicate whether the PIN policy data is successfully configured; or
sending, by the fourth network element, a first notification to the fifth network element, in which, the first notification includes updated PIN policy data.

In a sixth aspect, an embodiment of the present disclosure provides an information processing method. The method is performed by a core network device and includes: receiving a first request sent by a second network element, in which, the first request incudes a first identifier of a PIN and PIN policy data.

In combination with some embodiments of the sixth aspect, in some embodiments the method includes: sending a third response to the second network element, in which, the third response is used to indicate whether the PIN policy data is successfully configured.

In combination with some embodiments of the sixth aspect, in some embodiments, the second network element is an AF.

In a seventh aspect, embodiments of the present disclosure provide a first information processing apparatus. The apparatus includes a first receiving module, configured to receive a first request sent by a second network element, in which, the first request includes a first identifier of a PIN and PIN policy data.

In an eighth aspect, embodiments of the present disclosure provide a second information processing apparatus. The apparatus includes a second sending module, configured to send a first request to a first network element, in which, the first request includes a first identifier of a PIN and PIN policy data.

In a ninth aspect, embodiments of the present disclosure provide a third information processing apparatus. The apparatus includes a third receiving module, configured to receive a second request sent by a first network element, in which, the second request includes a first identifier of a PIN, and the second request is used to request a second identifier of the PIN.

In a tenth aspect, embodiments of the present disclosure provide a fourth information processing apparatus. The apparatus includes a fourth receiving module, configured to receive a third request sent by a first network element, in which, the third request includes at least one of: PIN policy data; a third identifier; or PIN policy data corresponding to the third identifier.

In an eleventh aspect, embodiments of the present disclosure provide a communication device. The communication device includes one or more processors. The processor is configured to call computer instructions to enable the communication device to perform the information processing method as described in the first aspect, the second aspect, the third aspect, the fourth aspect, the fifth aspect, the sixth aspect, or optional implementations of the first aspect, the second aspect, the third aspect, the fourth aspect, the fifth aspect and the sixth aspect.

In a twelfth aspect, embodiments of the present disclosure provide an information processing system. The system includes a first network element, a second network element, a third network element and a fourth network element. The first network element is configured to implement the information processing method as described in the optional implementation of the first aspect, the second network element is configured to implement the information processing method as described in the optional implementation of the second aspect, the third network element is configured to implement the information processing method as described in the optional implementation of the third aspect, and the fourth network element is configured to implement the information processing method as described in the optional implementation of the fourth aspect.

In a thirteenth aspect, embodiments of the present disclosure provide a storage medium having instructions stored thereon. When the instructions are performed on a communication device, the communication device is caused to perform the information processing method as described in the first aspect, the second aspect, the third aspect, the fourth aspect, the fifth aspect, the sixth aspect, or optional implementations of the first aspect, the second aspect, the third aspect, the fourth aspect, the fifth aspect and the sixth aspect.

In a fourteenth aspect, an embodiment of the present disclosure provides a program product. When the program product is performed by a communication device, the communication device is caused to perform the method as described in the first aspect, the second aspect, the third aspect, the fourth aspect, the fifth aspect, the sixth aspect, or optional implementations of the first aspect, the second aspect, the third aspect, the fourth aspect, the fifth aspect and the sixth aspect.

In a fifteenth aspect, an embodiment of the present disclosure provides a computer program which, when executed on a computer, causes the computer to execute the method as described in the first aspect, the second aspect, the third aspect, the fourth aspect, the fifth aspect, the sixth aspect, or optional implementations of the first aspect, the second aspect, the third aspect, the fourth aspect, the fifth aspect and the sixth aspect.

It is understandable that the first information processing apparatus, the second information processing apparatus, the third information processing apparatus, the fourth information processing apparatus, the communication device, the information processing system, the storage medium, the program product, and the computer program are all configured to perform the method proposed in the embodiments of the present disclosure. Therefore, for beneficial effects that can be achieved, reference can be made to the beneficial effects of the corresponding method, and details are not repeated herein.

The present disclosure proposes an information processing method, apparatus, and system, a communication device and a storage medium. In some embodiments, terms such as information processing method, and communication method, etc. can be replaced with each other, terms such as information processing apparatus, communication apparatus, etc. can be replaced with each other, and terms such as information processing system, communication system, etc. can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and an order of the steps in a certain embodiment can be arbitrarily exchanged. In addition, optional implementations in a certain embodiment can be arbitrarily combined. In addition, respective embodiments can be arbitrarily combined with other, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, a noun after the article may be understood as a singular expression or a plural expression.

In embodiments of the present disclosure, "a plurality of" refers to two or more.

In some embodiments, the terms "at least one of", "one or more", "a plurality of", "multiple", etc. may be used interchangeably.

In embodiments of the present disclosure, descriptions such as "at least one of A, B, C...", "A and/or B and/or C...", etc. include a situation where any one of A, B, C... exists alone, and also include a situation where any combination of any multiple ones of A, B, C, and each situation can exist alone. For example, "at least one of A, B, C" includes a situation where A exists alone, a situation where B exists alone, a situation where C exists alone, a combination of A and B, a combination of A and C, a combination of B and C, and a combination of A, B and C. For example, A and/or B includes a situation where A exists alone, a situation where B exists alone, and a combination of A and B.

In some embodiments, the descriptions such as "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms "duration" and "time period" in the present disclosure can be replaced with each other. In some embodiments, terms "moment", "time point" and "time position" in the present disclosure can be replaced with each other.

In some embodiments, terms such as "in response to ...", "in response to determining ...", "in a case of ...", "upon", "when", "if", "in case of", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, the apparatus, etc. can be interpreted as physical or virtual, and their names are not limited to the names mentioned in the embodiments, and terms such as "apparatus", "equipment", "device", "circuit", "network element", "node", "function", "unit", "section", "system", "network", "chip", "chip system", "entity", and "subject" and the like can be used interchangeably.

In some embodiments, terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array" " "cell", "macro cell", "small cell", "femto cell", "pico cell", "sector", "cell group", "carrier", "component carrier", "bandwidth part (BWP)" and the like can be used interchangeably.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device can be replaced by the terminal. For example, various embodiments of the present disclosure can also be applied to a structure in which communication between the access network device, the core network device, or the network device and the terminal is replaced by communication between multiple terminals (for example, also be referred to as device-to-device (D2D), vehicle-to-everything (V2X), etc.). In this case, the terminal can also be configured to have a structure that has all or part of the functions of the access network device. In addition, language such as "uplink" and "downlink" can also be replaced by the language corresponding to the communication between the terminals (for example, "side"). For example, an uplink channel, a downlink channel, etc. can be replaced by a side channel, and an uplink, a downlink, etc. can be replaced by a side link.

In some embodiments, the terminal may be replaced by the access network device, the core network device, or the network device. In this case, the access network device, the core network device, or the network device may also be configured to have a structure that has all or part of the functions of the terminal.

In some embodiments, a name of information, etc. is not limited to names mentioned in the embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" and the like can be used interchangeably.

In some embodiments, terms such as "uplink", "up link", "physical uplink" can be interchangeable, and terms such as "downlink", "down link", "physical downlink" can be interchangeable, and terms such as "side", "sidelink", "side communication", "sidelink communication", "direct connection", "direct link", "direct communication", "direct link communication" and the like can be interchangeable.

In some embodiments, terms "downlink control information (DCI)", "downlink (DL) assignment", "DL DCI", "uplink (UL) grant", "UL DCI" and the like may be used interchangeably.

In some embodiments, terms such as "physical downlink shared channel (PDSCH)", "DL data" and the like can be interchangeable, and terms such as "physical uplink shared channel (PUSCH)", "UL data" and the like can be interchangeable.

In some embodiments, terms such as "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and the like may be interchangeable.

In some embodiments, terms such as "synchronization signal (SS)", "synchronization signal block (SSB)", "reference signal (RS)", "pilot", "pilot signal" and the like can be used interchangeably.

In some embodiments, the terms such as "moment", "time point", "time", "time position" and the like can be interchangeable, and the terms such as "duration", "period", "time window", "window", "time" and the like can be interchangeable.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and the like can be used interchangeably.

In some embodiments, the terms such as "wireless access scheme", "waveform", etc. may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like can be used interchangeably.

In some embodiments, the terms such as "frame", "radio frame", "subframe", "slot", "sub-slot", "mini-slot", "symbol", "symbol", "transmission time interval (TTI)" and so on can be used interchangeably.

In some embodiments, "obtain", "acquire", "get", "receive", "transmit", "bidirectional transmission", "send and/or receive" can be interchangeable, and can be interpreted as receiving from other entities, obtaining from a protocol, obtaining by self-processing, autonomous implementation, etc.

In some embodiments, the terms such as "send", "transmit", "report", "issue", "transmit", "bi-directionally transmit", "send and/or receive" and the like can be used interchangeably.

In some embodiments, "predetermined" or "preset" may be interpreted as being pre-specified in a protocol, etc., or may be interpreted as an apparatus performing a pre-set action, etc.

In some embodiments, "determining" can be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, the determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as apparatuses included in the network (e.g., access network device, core network device, etc.).

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

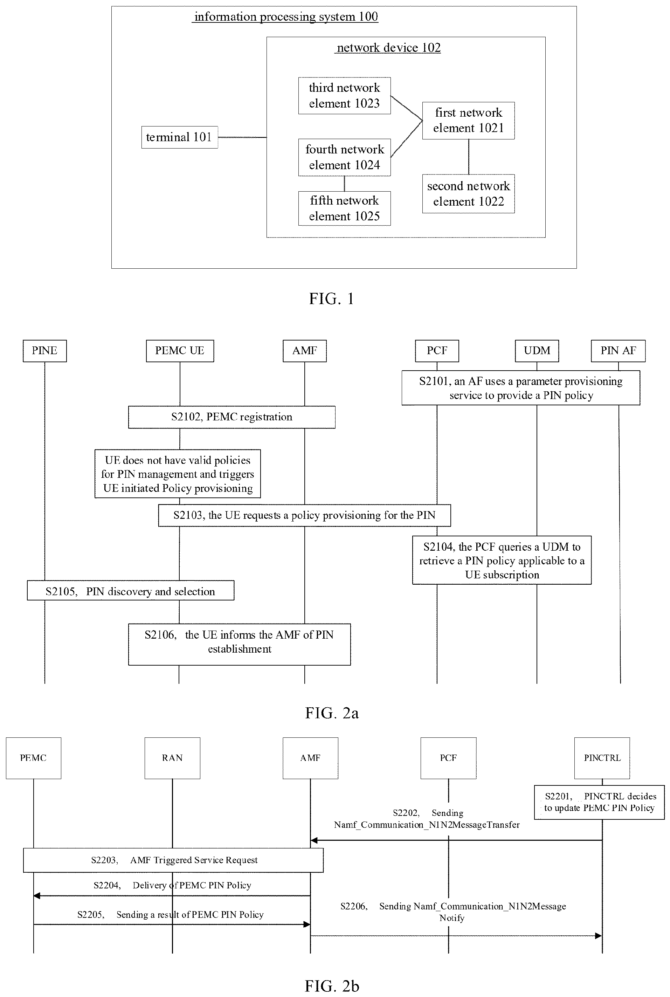

FIG. 1 is a schematic diagram of an information processing system 100 according to an embodiment of the present disclosure. As shown in FIG. 1, the information processing system 100 may include a terminal 101 and a network device 102. The network device 102 may include at least one of an access network device or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be a device including one or more network elements, or may be a plurality of devices or a group of devices, each including all or part of the one or more network elements. The network element may be virtual or physical. The core network may include, for example, at least one of an evolved packet core (EPC), a 5G core network (5GCN), or a next generation core (NGC).

In some embodiments, the first network element 1021 is, for example, a network exposure function (NEF), but the name is not limited thereto.

In some embodiments, the second network element 1022 is, for example, an application function (AF), but the name is not limited thereto.

In some embodiments, the third network element 1023 is, for example, a unified data management (UDM), and the name is limited to this.

In some embodiments, the fourth network element 1024 is, for example, a unified data repository (UDR), and the name is limited to this.

In some embodiments, the fifth network element 1025 is, for example, a policy control function (PCF), but the name is not limited thereto.

In some embodiments, the second network element 1022 may be independent of the core network device.

In some embodiments, the second network element 1022 may be part of the core network device.

It can be understood that the information processing system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the information processing system 100 or part of the subjects shown in FIG. 1, but are not limited thereto. The subjects shown in FIG. 1 are examples, and the communication system may include all or part of the subjects in FIG. 1, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In some embodiments, a PIN is composed of PIN elements that communicate using a PIN direct connection or a direct network connection and are managed locally (using a PIN element with management capability). For example, the PIN includes a network of wearable devices and smart home or smart office devices. Through a PIN element with gateway function (PINE), the PINE can access to 5G network services and can communicate with PINEs that are not within a range to use the PIN direct connection. The PIN includes at least one PINE with gateway capability (PEGC) and at least one PINE with management capability (PEMC).

In some embodiments, regarding management of PIN and PIN elements, details are described as follows.

For example, for the management of the PIN, the management of the PIN includes management of different types of PINEs and configurations of the PIN. Both a network operator and an authorized third party, i.e. PINE with management capability (PEMC), may create and configure the PIN and the PINEs.

For example, after a PIN is created, the PEMC may add a PEGC into the PIN, or remove the PEGC from the PIN, as well as add the PINE into the PIN and associate it to some PEGCs that have already been added into the PIN, or remove the PINE from the PIN.

For example, the following aspects in 5GS are studied, which includes:
how to support a mechanism for the network operator or the authorized third party (e.g., PEMC) for the PIN management, such as creating, modifying, deleting, and activating and/or deactivating the PIN;
how to support for the management of the PINEs, including adding and/or removing the PINEs, and/or, adding and/or removing associations between PEGC and other PIINEs;
how to support establishing and enforcing a validity duration and a time validity of the PIN (e.g., the PIN is valid for 30 minutes, the PIN is valid from 15:00 UTC to 23:00 UTC) and of the PINEs within the PIN (e.g., the PINE will be a member of PIN for 1 hour, the PINE will be member of the PIN from 16:00 UTC to 17:00 UTC).

In some embodiments, regarding communication of PIN, details are described as follows.

If an AF for the PIN is used, the AF can request the 5GC to exposes capabilities in order for the AF to provision parameters for resources configuration/deconfiguration for the PIN, QoS authorization for the PIN, QoS control for PIN traffic, and routing control for the PIN traffic. The mechanism and criteria used by the AF to determine the need for a QoS modification for the PIN traffic are out of 3GPP scope.

If the AF for the PIN is used, the AF may provide necessary parameters to the 5GC which may be considered by PCF to generate the UE route selection policy (URSP) of the PIN for PDU session selection by the PEGC and to generate the URSP accordingly for the PEMC.

The UDR is enhanced to support the storage and retrieval of PIN related policy and QoS parameters.

If the AF for the PIN is used, the 5GC authorizes the number of PINs that the AF requests to create, which results in the number of PDU sessions per PEGC or PEMC for PIN, according to a PIN service subscription of a user, which reflect an agreement between user and operator for using PIN service.

An embodiment of the present disclosure provides a policy provisioning framework for PIN. In an example, as shown in FIG. 2a, a PIN pre-configuration policy is provided and includes the following steps.

At step S2101, an AF uses a parameter provisioning service to provide a PIN policy. The PIN policy may include a PIN identifier policy, a privacy policy and a traffic routing policy.

At step S2102, PEMC registration. For example, a UE capable of performing a PEMC operation registers in a 5G network. If subscription data allows, an access and mobility management function (AMF) includes PEMC authorization. That is, the AMF takes the PEMC authorization as part of registration procedure. For example, the UE does not have a valid PIN management policy, and UE-initiated policy provisioning is triggered.

At step S2103, the UE requests a policy provisioning for the PIN. For example, the UE requests PIN policy provisioning to a PCF. For example, the UE may optionally include a PIN AF identifier to fetch the appropriate policy. For example, the PIN policy may include a PIN identifier, whether to notify the 5GC to establish the PIN and/or traffic routing for PEGC.

At step S2104, the PCF queries a UDM to retrieve a PIN policy applicable to a UE subscription. For example, the PCF fetches the PIN policy according to the UE subscription. For example, the PIN policy may include the PIN identifier or a policy for self-assigning PIN identifier, the privacy policy, the traffic routing policy. For example, the PIN policy may also include an indication to inform the 5GC about PIN creation. The PCF delivers a UE policy using a UE configuration update procedure defined in clause 4.2.4 of TS 23.502 [3].

At step S2105, PIN discovery and selection. For example, the PIN elements are added to the PIN.

At step S2106, the UE informs the AMF of PIN establishment. For example, the UE provides the AMF with the PIN identifier and the UE identifier of the PEGC. For example, the AMF may provide, based on the UE subscription, PIN restriction policies, for example, time and geographic restriction policies.

Problem: this solution is not referring to the conclusion that "UDR is enhanced to support the storage and retrieval of PIN related policy and QoS parameters". And details how to provision the PIN policy data to the UDR or the UDM is covered by this solution.

An embodiment of the present disclosure provides a procedure of network triggered service request to update PIN policy. As shown in FIG. 2b, the procedure includes the following steps.

At step S2201, PIN CTRL decides to update a PEMC PIN policy. For example, the PIN CTRL decides to update the PEMC PIN policy due to operator or third-party policy update.

At step S2202, the PIN CTRL sends Namf_communication_N1N2Message Transfer. For example, the PIN CTRL invokes a Namf_communication_NIN2Message Transfer service operation provided by the AMF. The message includes a SUPI of a PEMC, and/or a PEMC PIN policy container.

At step S2203, an AMF triggers a service request. For example, if the PEMC is registered and reachable by AMF in either 3GPP access or non-3GPP access, AMF may transfer transparently the PEMC PIN Policy container to the PEMC via registered and reachable access.

For example, if the PEMC is not reachable by the AMF over both 3GPP and non-3GPP access, the AMF reports to the PCF that the PEMC PIN policy container cannot be delivered to the PEMC using Namf_communication_N1N2Message Transfer as mentioned in clause 4.2.3.3 of TS 23.502 [3].

At step S2204, the AMF sends the PEMC PIN policy to the PEMC. If the PEMC is in a connection management (CM) connected (CM-CONNECTED) state over 3GPP access or non-3GPP access, the AMF transfers transparently the PEMC PIN policy container (PIN related policy information) received from the PIN CTRL to the PEMC. The PEMC policy container includes a list of PIN policies.

At step S2205, the PEMC sends a result of the PEMC PIN policy to the AMF. For example, the PEMC updates the PIN policy provided by the PIN CTRL and sends the result to the AMF.

At step S2206, the AMF sends Namf_communication_N1N2Message notification to the PIN CTRL. In an example, if the AMF receives the PEMC PIN policy container and the PIN CTRL subscribes to be notified of reception of the PEMC PIN policy container, then the AMF forwards a response of the PEMC to the PIN CTRL using Namf_communication_N1N2Message notification. The PIN TCTRL may further handle successful and failure notification accordingly.

Problem: this solution is based on a new network function (PIN CTRL) which is not supported by the conclusion and/or agreement.

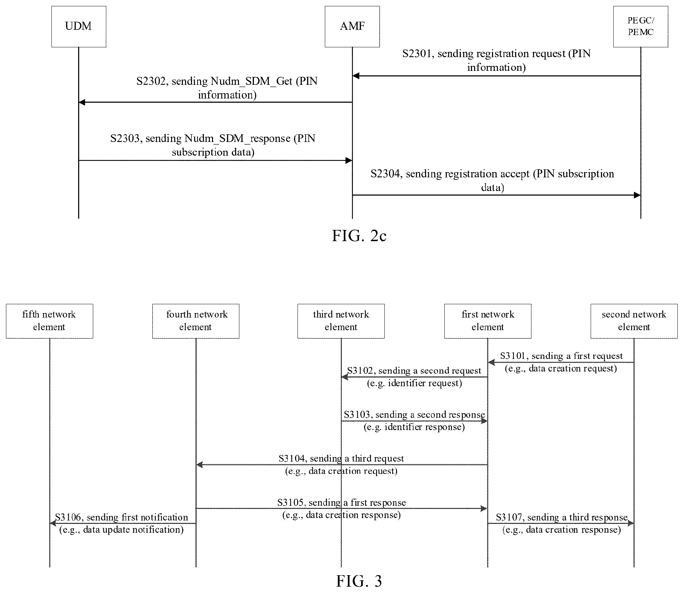

An embodiment of the present disclosure provides a solution for parameter provisioning of PIN subscription data. As shown in FIG. 2c, a method for providing PIN subscription data is provided, and the method includes the following steps.

At step S2301, a PEGC or a PEMC sends a registration request including PIN information. For example, the PEGC or the PEMC initiates a registration procedure. As part of the registration procedure, the PEGC or the PEMC includes PIN input information.

At step S2302, an AMF sends Nudm_SDM_Get including the PIN input information to a UDM.

At step S2303, the AMF receives Nudm_SDM_response sent by the UDM, including PIN subscription data. For example, the UDM based on subscription or PIN input information includes the PIN subscription data as described below.

At step S2304, the AMF sends a registration accept to the PEGC or the PEMC. For example, the registration accept includes the PIN subscription data. For example, if the UDM includes the PIN subscription data, the AMF indicates to a UE in a registration accept message that the UE is allowed to act as the PEGC or the PEMC.

Problem: this solution is UE or PEGC or PEMC triggered for PIN subscription data provisioning. This solution does not include a case that a third party provides the PIN policy data.

FIG. 3 is an interactive schematic diagram of an information processing method according to an embodiment of the present disclosure. As illustrated in FIG. 3, as shown in FIG. 3, an embodiment of the present disclosure relates to an information processing method. The method is applied for an information processing system 100, and includes the following steps.

At step S3101, a second network element sends a first request to a first network element.

In some embodiments, the first network element receives the first request sent by the second network element.

In some embodiments, the first request is used to provide PIN policy data to a fourth network element.

In some embodiments, the first request is used to request a result of whether the PIN policy data is successfully configured. In an example, the first request is used to request a third response, and the third response is used to indicate whether the PIN policy data is successfully configured. In an example, whether it is successfully configured may include whether it is successfully created, whether it is successfully updated, etc.

In some embodiments, the name of the first request is not limited, and is, for example, one of: a creation request, an update request, or a configuration request. For example, the first request is a data registration request, a data update request, or a data configuration request. For example, the first request is a registration request, an update request, or a configuration request for the PIN policy data.

In some embodiments, the first request includes a first identifier of a PIN and PIN policy data.

In some embodiments, the first identifier is an external PIN identifier. In an example, the external PIN identifier is an identifier configured for the PIN by a third party (e.g., an AF). For example, the external PIN identifier is unique within an AF field. In an example, the first identifier may include at least one of any reference number and any index for indicating the PIN.

In some embodiments, the PIN policy data includes at least one of: a routing rule; a PIN identifier policy; a privacy policy; or a QoS parameter.

For example, the routing rule is used to indicate a rule for selecting a path in a core network for the PIN element.

For example, the PIN identifier policy is used to indicate a policy for the identifier of the PIN. In an example, the identifier includes at least one of a first identifier, a second identifier, and a third identifier.

For example, the privacy policy is used to indicate a policy of whether information of the PIN element needs to be changed. In an example, the information includes at least one of the identifier, the PIN policy data, and the QoS parameter.

For example, the QoS parameter include at least one of: a maximum throughput, a latency, a packet loss rate. In an example, the QoS parameter may include at least one of: a PDU set error rate (PSER), a PDU set delay budget (PSDB) and/or PDU set integrated indication (PSII).

At step S3102, the first network element sends a second request to a third network element.

In some embodiments, the third network element receives the second request sent by the first network element.

In some embodiments, the second request is used to request a second identifier of the PIN.

In some embodiments, the second request is used to request a second response. For example, the second response carries a second identifier.

In some embodiments, the name of the second request is not limited, and is, for example, an identifier request. For example, the second request is a PIN identifier request.

In some embodiments, the second request includes the first identifier of the PIN.

In some embodiments, the second request further includes first information, the first information is used to indicate determining the second identifier corresponding to the first identifier. In an example, the first information is used to obtain the second identifier. In an example, the first information may be a PIN identifier transfer. In an example, the PIN identifier transfer is used to indicate determining the second identifier corresponding to the first identifier.

In some embodiments, the second identifier is an internal PIN identifier. In an example, the internal PIN identifier is an identifier configured by the core network device for the PIN. For example, the internal PIN identifier is an identifier assigned by the UDM for the PIN. For example, the second identifier may include at least one of any reference number and any index for indicating the PIN.

At step S3103, the third network element sends the second response to the first network element.

In some embodiments, the first network element receives the second response sent by the third network element.

In some embodiments, the second response is determined based on the second request.

In some embodiments, the second response is used to provide the second identifier of the PIN. In an example, the second response is also used to provide a third identifier.

In some embodiments, the name of the second response is not limited, and is, for example, an identifier response. For example, the second response is a PIN identifier response.

In some embodiments, the second response includes the second identifier of the PIN. For example, the second response also includes the third identifier.

In some embodiments, the third identifier includes at least one of: one or more third identifiers of one or more PEGCs in the PIN, one or more third identifiers of one or more PEMCs in the PIN, or one or more third identifiers of one or more PINEs in the PIN.

For example, the third identifier includes at least one of: a GPSI or a SUPI. Illustratively, the third identifier includes at least one of: one or more GPSIs of one or more PEGCs in the PIN, one or more SUPIs of one or more PEGCs in the PIN, one or more GPSIs of one or more PEMCs in the PIN, one or more SUPIs of one or more PEMCs in the PIN, one or more GPSIs of one or more PINEs in the PIN, or one or more SUPIs of one or more PINEs in the PIN.

For example, the second response includes a list including at least one third identifier.

At step S3104, the first network element sends a third request to the fourth network element.

In some embodiments, the fourth network element receives the third request sent by the first network element.

In some embodiments, the third request is used to request configuring PIN policy data.

In some embodiments, the third request is used to request a result of whether the PIN policy data is successfully configured. For example, the third request is used to request the first response, and the first response is used to indicate whether the PIN policy data is successfully configured.

In some embodiments, the name of the third request is not limited, and is, for example, one of: the creation request, the update request, or the configuration request. For example, the third request is the data registration request, the data update request, or the data configuration request. For example, the third request is the registration request, the update request, or the configuration request for the PIN policy data.

In some embodiments, the third request includes at least one of: the PIN policy data, the third identifier, and the PIN policy data corresponding to the third identifier.

At step S3105, the fourth network element sends the first response to the first network element.

In some embodiments, the first network element receives the first response sent by the fourth network element.

In some embodiments, the first response is used to provide a result of the third request. For example, the first response is used to provide a result of the first request.

In some embodiments, the name of the first response is not limited, and is, for example, one of: the create response, the update response, or the configure response. In an example, the first response is the data create response, the data update response, or the data configure response. Optionally, the first response is a result of one of creation, update, and configuration for the PIN policy data.

In some embodiments, the first response is determined based on the third request.

In some embodiments, the first response is used to indicate whether the PIN policy data is successfully configured.

In some embodiments, the first response includes: second information or third information. For example, the second information is used to indicate that the PIN policy data is successfully configured. The second information is used to indicate that the PIN policy data is successfully created. For example, the second information is used to indicate that the PIN policy data is successfully updated. For example, the third information is used to indicate that the PIN policy data is not successfully configured. For example, the third information is used to indicate that the PIN policy data is not successfully created. For example, the third information is used to indicate that the PIN policy data is not successfully updated.

At step S3106, the fourth network element sends a first notification to a fifth network element.

In some embodiments, the fifth network element receives the first notification sent by the first network element.

In some embodiments, the first notification is used to provide the PIN policy data to the fifth network element. For example, the first notification is used to provide updated PIN policy data to the fifth network element.

In some embodiments, the name of the first notification is not limited, and is, for example, an update notification. In an example, the first notification is a data update notification. For example, the first notification is an update notification for the PIN policy data.

In some embodiments, the first notification includes the updated PIN policy data. In an example, the first notification includes: the PIN policy data. In an example, the first notification includes: the third identifier and updated PIN policy data corresponding to the third identifier.

At step S3107, the first network element sends a third response to the second network element.

In some embodiments, the second network element receives the third response sent by the first network element.

In some embodiments, the name of the third response is not limited, and is, for example, one of: a create response, an update response, or a configuration response. In an example, the third response is a data create response, a data update response, or a data configuration response. In an example, the third response is a result of one of creation, update, and configuration for the PIN policy data.

In some embodiments, the third response is used to provide a result of the first request.

In some embodiments, the third response is determined based on the first request.

In some embodiments, the third response is used to indicate whether the PIN policy data is successfully configured.

In some embodiments, the third response includes: the second information or the third information. For example, the second information is used to indicate that the PIN policy data is successfully configured. The second information is used to indicate that the PIN policy data is successfully created. For example, the second information is used to indicate that the PIN policy data is successfully updated. For example, the third information is used to indicate that the PIN policy data is not successfully configured. For example, the third information is used to indicate that the PIN policy data is not successfully created. For example, the third information is used to indicate that the PIN policy data is not successfully updated.

In some embodiments, the third response is the same as the first response, or the third response is different from the first response.

The information processing method involved in the embodiments of the present disclosure may include at least one of steps S3101 to S3107. For example, step S3101 may be implemented as an independent embodiment; step S3104 may be implemented as an independent embodiment; step S3106 may be implemented as an independent embodiment; a combination of step S3101 and step S3107 may be implemented as an independent embodiment; a combination of step S3101, step S3102 and step S3103 may be implemented as an independent embodiment; a combination of step S3101, step S3102, step S3103 and step S3104 may be implemented as an independent embodiment; a combination of step S3101, step S3102, step S3103, step S3104 and step S3105 may be implemented as an independent embodiment; a combination of step S3102 and step S3103 and step S3104 is implemented as an independent embodiment; a combination of step S3102 and step S3103 and step S3104 and step S3105 is implemented as an independent embodiment; a combination of step S3101 and step S3102 and step S3103 and step S3104 and step S3105 and step S3106 and step S3107 is implemented as an independent embodiment, which is not limited herein.

In some embodiments, step S3105 and step S3106 may be exchanged in order or executed simultaneously; or step S3106 and step S3107 may be exchanged in order or executed simultaneously.

In some embodiments, step S3102, step S3103, step S3104, step S3105, step S3106 and step S3107 may be optional, and one or more of these steps may be omitted or replaced in different embodiments.

In some embodiments, step S3101, step S3102, step S3103, step S3105, step S3106 and step S3107 may be optional, and one or more of these steps may be omitted or replaced in different embodiments.

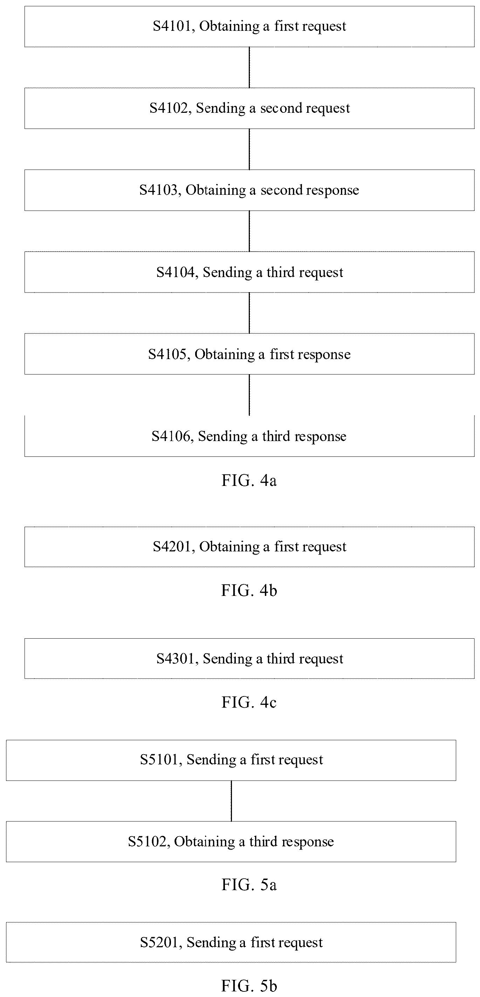

FIG. 4a is a flowchart of an information processing method according to an embodiment of the present disclosure. As shown in FIG. 4a, the embodiment of the present disclosure relates to an information processing method. The method is performed by a first network element and includes the following steps.

At step S4101, a first request is acquired.

For the optional implementation of step S4101, reference can be made to the optional implementation of step S3101 in FIG. 3 and other associated parts in the embodiment involved in FIG. 3, and details are not be described here.

In some embodiments, the first network element receives the first request sent by the second network element, which is not limited thereto, and may also receive the first request sent by other entities.

In some embodiments, the first network element obtains the first request specified by a protocol.

In some embodiments, the first network element obtains the first request from an upper layer(s).

In some embodiments, the first network element performs processing to obtain the first request.

In some embodiments, step S4101 may be omitted. The first network element may autonomously implement the function indicated by the first request, or the above function may be null or default.

In an example, the first request is used to send a second request from the first network element to the third network element.

At step S4102, a second request is sent.

For the optional implementation of step S4102, reference can be made to the optional implementation of step S3102 in FIG. 3 and other associated parts in the embodiment involved in FIG. 3, and details are not be described here.

In some embodiments, the first network element sends the second request to the second network element, which is not limited thereto, and may also send the second request to other entities.

At step S4103, a second response is obtained.

For the optional implementation of step S4103, reference can be made to the optional implementation of step S3103 in FIG. 3 and other associated parts in the embodiment involved in FIG. 3, and details are not be described here.

In some embodiments, the first network element receives the second response sent by the third network element, which is not limited thereto, and may also receive the second response sent by other entities.

In some embodiments, the first network element obtains the second response specified by a protocol.

In some embodiments, the first network element obtains the second response from an upper layer(s).

In some embodiments, the first network element performs processing to obtain the second response.

In some embodiments, step S4103 may be omitted. The first network element may autonomously implement the function indicated by the second response, or the above function may be null or default.

At step S4104, a third request is sent.

For the optional implementation of step S4104, reference can be made to the optional implementation of step S3104 in FIG. 3 and other associated parts in the embodiment involved in FIG. 3, and details are not be described here.

In some embodiments, the first network element sends the third request to the fourth network element, which is not limited thereto, and may also send the third request to other entities.

At step S4105, the first response is obtained.

For the optional implementation of step S4105, reference can be made to the optional implementation of step S3105 in FIG. 3 and other associated parts in the embodiment involved in FIG. 3, and details are not be described here.

In some embodiments, the first network element receives the first response sent by the fourth network element, which is not limited thereto, and may also receive the first response sent by other entities.

In some embodiments, the first network element obtains the first response specified by a protocol.

In some embodiments, the first network element obtains the first response from an upper layer(s).

In some embodiments, the first network element performs processing to obtain the first response.

In some embodiments, step S4105 may be omitted. The first network element may autonomously implement the function indicated by the first response, or the above function may be null or default.

At step S4106, a third response is sent.

For the optional implementation of step S4106, reference can be made to the optional implementation of step S3106 in FIG. 3 and other associated parts in the embodiment involved in FIG. 3, and details are not be described here.

In some embodiments, the first network element sends the third response to the second network element, which is not limited thereto, and may also send the first response to other entities.

The information processing method involved in the embodiment of the present disclosure may include at least one of steps S4101 to S4106. For example, step S4101 may be implemented as an independent embodiment; step S4104 may be implemented as an independent embodiment; a combination of step S4101, step S4102 and step S4103 may be implemented as an independent embodiment; a combination of step S4101, step S4102, step S4103 and step S4104 may be implemented as an independent embodiment; a combination of step S4101, step S4102, step S4103, step S4104 and step S4105 may be implemented as an independent embodiment; a combination of step S4102, step S4103 and step S4104 may be implemented as an independent embodiment; a combination of step S4102, step S4103, step S4104 and step S4105 may be implemented as an independent embodiment; a combination of step S4101, step S4102, step S4103, step S4104, step S4105 and step S4106 may be implemented as an independent embodiment, which is not limited thereto.

In some embodiments, step S4102, step S4103, step S4104, step S4105 and step S4106 may be optional, and one or more of these steps may be omitted or replaced in different embodiments.

In some embodiments, step S4101, step S4102, step S4103, step S4105 and step S4106 may be optional, and one or more of these steps may be omitted or replaced in different embodiments.

FIG. 4b is a flowchart of an information processing method according to an embodiment of the present disclosure. As shown in FIG. 4b, the embodiment of the present disclosure relates to an information processing method. The method is performed by a first network element and includes the following step.

At step S4201, a first request is acquired.

For the optional implementation of step S4201, reference can be made to the optional implementation of step S3101 in FIG. 3 and step S4101 in FIG. 4a, and other associated parts in the embodiments involved in FIG. 3 and FIG. 4a, and details are not be described here.

In some embodiments, the PIN policy data includes at least one of: a routing rule, a PIN identifier policy, a privacy policy, or a QoS parameter.

In some embodiments, the method includes: sending a second request to a third network element, in which, the second request includes the first identifier of the PIN, and the second request is used to request a second identifier of the PIN.

In some embodiments, the second request includes: first information, and the first information is used to indicate determining the second identifier corresponding to the first identifier.

In some embodiments, the method includes: receiving a second response sent by the third network element, in which, the second response includes the second identifier.

In some embodiments, the second response further includes at least one of: one or more third identifiers of one or more PEGCs in the PIN, one or more third identifiers of one or more PEMCs in the PIN, or one or more third identifiers of one or more PINEs in the PIN.

In some embodiments, the third identifier includes at least one of: a GPSI or a SUPI.

In some embodiments, the method includes: sending a third request to a fourth network element, in which, the third request includes at least one of: the PIN policy data; a third identifier; or PIN policy data corresponding to the third identifier.

In some embodiments, the method comprises one of:
receiving a first response sent by the fourth network element, in which, the first response is used to indicate whether the PIN policy data is successfully configured; or
sending a third response to the second network element, in which the third response is used to indicate whether the PIN policy data is successfully configured.

In some embodiments, the first network element is a NEF; and/or, the second network element is an AF.

In some embodiments, the third network element is a UDM.

In some embodiments, the fourth network element is a UDR.

The above embodiments may be implemented independently or in combination with each other. For optional implementations, reference can be made to the optional implementations of the steps in FIG. 3 and FIG. 4a, and details will not be described here.

FIG. 4c is a flowchart of an information processing method according to an embodiment of the present disclosure. As shown in FIG. 4c, the embodiment of the present disclosure relates to an information processing method. The method is performed by a first network element and includes the following step.

At step S4301, a third request is sent.

For the optional implementation of step S4301, reference can be made to the optional implementation of step S3104 in FIG. 3 and step S4104 in FIG. 4a, and other associated parts in the embodiments involved in FIG. 3 and FIG. 4a, and details are not be described here.

In the embodiment of the present disclosure, step S4301 may be combined with at least one of step S4101, step S4102, step S4103, step S4105 and step S4106 in FIG. 4a.

FIG. 5a is a flowchart of an information processing method according to an embodiment of the present disclosure. As shown in FIG. 5a, the embodiment of the present disclosure relates to an information processing method. The method is performed by a second network element and includes the following step.

At step S5101, a first request is sent.

For the optional implementation of step S5101, reference can be made to the optional implementation of step S3101 in FIG. 3 and other associated parts in the embodiment involved in FIG. 3, and details are not be described here.

In some embodiments, the second network element sends the first request to a first network element, which is not limited thereto, and may also send the first request other entities.

At step S5102, a third response is obtained.

For the optional implementation of step S5102, reference can be made to the optional implementation of step S3107 in FIG. 3 and other associated parts in the embodiment involved in FIG. 3, and details are not be described here.

In some embodiments, the second network element receives the third response sent by the first network element, which is not limited thereto, and may also receive the third response sent by other entities.

In some embodiments, the second network element obtains the third response specified by a protocol.

In some embodiments, the second network element obtains the third response from an upper layer(s).

In some embodiments, the second network element performs processing to obtain the third response.

In some embodiments, step S5102 may be omitted. The second network element may autonomously implement the function indicated by the third response, or the above function may be null or default.

FIG. 5b is a flowchart of an information processing method according to an embodiment of the present disclosure. As shown in FIG. 5b, the embodiment of the present disclosure relates to an information processing method. The method is performed by a second network element and includes the following step.

At step S5201, a first request is sent.

For the optional implementation of step S5201, reference can be made to the optional implementation of step S3101 in FIG. 3 and step S5101 in FIG. 5a, and other associated parts in the embodiments involved in FIG. 3 and FIG. 5a, and details are not be described here.

In combination with some embodiments of the second aspect, in some embodiments, the PIN policy data includes at least one of:
a routing rule;
a PIN identifier policy;
a privacy policy; or
a QoS parameter.

In some embodiments, the method includes: receiving a third response sent by the first network element, in which, the third response is used to indicate whether the PIN policy data is successfully configured.

In some embodiments, the first network element is a NEF; and/or the second network element is an AF.

The above embodiments may be implemented independently or in combination with each other. For optional implementations, reference can be made to the optional implementations of the steps in FIG. 3 and FIG. 5a, and details will not be described here.

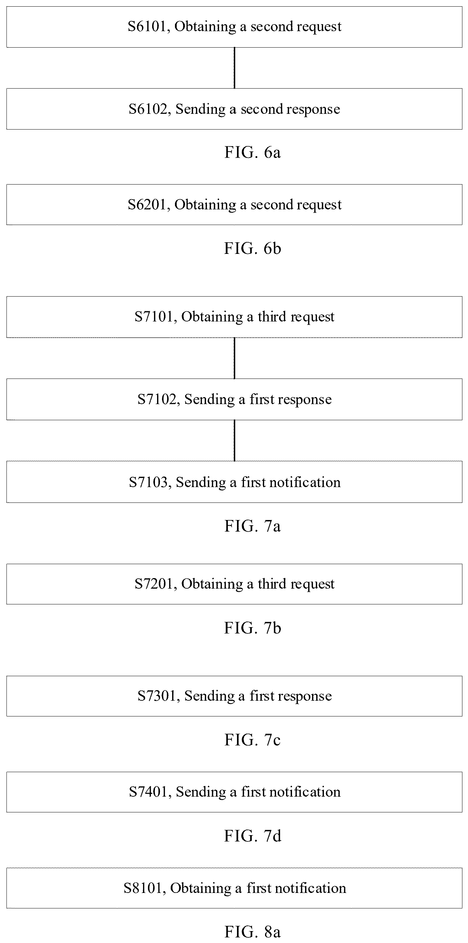

FIG. 6a is a flowchart of an information processing method according to an embodiment of the present disclosure. As shown in FIG. 6a, the embodiment of the present disclosure relates to an information processing method. The method is performed by a third network element and includes the following steps.

At step S6101, a second request is obtained.

For the optional implementation of step S6101, reference can be made to the optional implementation of step S3102 in FIG. 3 and other associated parts in the embodiment involved in FIG. 3, and details are not be described here.

In some embodiments, the third network element receives a second request sent by the first network element, which is not limited thereto, and may also receive the second request sent by other entities.

In some embodiments, the third network element obtains the second request specified by a protocol.

In some embodiments, the third network element obtains the second request from an upper layer(s).

In some embodiments, the third network element performs processing to obtain the second request.

In some embodiments, step S6101 may omitted. The third network element may autonomously implement the function indicated by the second request, or the above function may be null or default.

At step S6102, a second response is sent.

For the optional implementation of step S6102, reference can be made to the optional implementation of step S3103 in FIG. 3 and other associated parts in the embodiment involved in FIG. 3, and details are not be described here.

In some embodiments, the third network element sends the second response to the first network element, which is not limited thereto, and may also send the second response to other entities.

The information processing method involved in the embodiment of the present disclosure may include at least one of step S6101 and step S6102. For example, step S6101 may be implemented as an independent embodiment; the combination of step S6101 and step S6102 may be implemented as an independent embodiment.

In some embodiments, step S6101 may be optional, and one or more of these steps may be omitted or replaced in different embodiments.

FIG. 6b is a flowchart of an information processing method according to an embodiment of the present disclosure. As shown in FIG. 6b, the embodiment of the present disclosure relates to an information processing method. The method is performed by a third network element and includes the following steps.

At step S6201, a second request is obtained.

For the optional implementation of step S6201, reference can be made to the optional implementation of step S3102 in FIG. 3 and the optional implementation of step S6101 in FIG. 6a and other associated parts in the embodiment involved in FIG. 3 and FIG. and 6a, and details are not be described here.

In some embodiments, the second request includes first information, and the first information is used to indicate determining a second identifier to correspond to a first identifier.

In some embodiments, the method includes: sending a second response to the first network element, in which, the second response includes the second identifier.

In some embodiments, the second response further includes at least one of: one or more third identifiers of one or more PEGCs in the PIN; one or more third identifiers of one or more PEGCs in the PIN; or one or more third identifiers of one or more PINEs in the PIN.

In some embodiments, the third identifier includes at least one of: a GPSI or a SUPI.

In some embodiments, the first network element is a NEF, and/or the third network element is a UDM.

The above embodiments may be implemented independently or in combination with each other. For optional implementations, reference can be made to the optional implementations of the steps in FIG. 3 and FIG. 6a, and details will not be described here.

FIG. 7a is a flowchart of an information processing method according to an embodiment of the present disclosure. As shown in FIG. 7a, the embodiment of the present disclosure relates to an information processing method. The method is performed by a fourth network element and includes the following step.

At step S7101, a third request is obtained.

For the optional implementation of step S7101, reference can be made to the optional implementation of step S3104 in FIG. 3 and other associated parts in the embodiment involved in FIG. 3, and details are not be described here.

In some embodiments, the fourth network element receives the third request sent by a first network element, which is not limited thereto, and may also receive the third request sent by other entities.

In some embodiments, the fourth network element obtains the third request specified by a protocol.

In some embodiments, the fourth network element obtains the third request from an upper layer(s).

In some embodiments, the fourth network element performs processing to obtain the third request.

In some embodiments, step S7101 may be omitted. The fourth network element may autonomously implement the function indicated by the third request, or the above function may be null or default.

At step S7102, a first response is sent.

For the optional implementation of step S7102, reference can be made to the optional implementation of step S3105 in FIG. 3 and other associated parts in the embodiment involved in FIG. 3, and details are not be described here.

In some embodiments, the fourth network element sends the first response to the first network element, which is not limited thereto, and may also send the first response to other entities.

At step S7103, a first notification is sent.

For the optional implementation of step S7103, reference can be made to the optional implementation of step S3106 in FIG. 3 and other associated parts in the embodiment involved in FIG. 3, and details are not be described here.

In some embodiments, the fourth network element sends the first notification to the first network element, which is not limited thereto, and may also send the first notification to other entities.

In some embodiments, the fourth network element receives a fourth request sent by the fifth network element. In an example, the fourth network element sends a first notification to the fifth network element in response to receiving the fourth request sent by the fifth network element.

In some embodiments, the fourth request is used to request updated PIN policy data.

In some embodiments, the name of the fourth request is not limited, and is, for example, a subscription request. In an example, the fourth request is a data subscription request, for example, the fourth request may be a subscription request for PIN policy data.

The information processing method involved in the embodiment of the present disclosure may include at least one of steps S7101 to S7103. For example, step S7101 may be implemented as an independent embodiment; step S7103 may be implemented as an independent embodiment; a combination of step S7101 and step S7102 may be implemented as an independent embodiment; a combination of step S7101, step S7102 and step S7103 may be implemented as an independent embodiment.

In some embodiments, step S7102 and step S7103 may be executed in an interchangeable order or simultaneously.

In some embodiments, step S7102 and step S7103 may be optional, and one or more of these steps may be omitted or replaced in different embodiments.

FIG. 7b is a flowchart of an information processing method according to an embodiment of the present disclosure. As shown in FIG. 7b, the embodiment of the present disclosure relates to an information processing method. The method is performed by a fourth network element and includes the following step.

At step S7201, a third request is obtained.

For the optional implementation of step S7201, reference can be made to the optional implementation of step S3104 in FIG. 3 or the optional implementation of step S7101 in FIG. 7a and other associated parts in the embodiment involved in FIG. 3 and FIG. 7a, and details are not be described here.

In some embodiments, the third identifier is at least one of: one or more third identifiers of one or more PEGCs in the PIN; one or more third identifiers of one or more PEGCs in the PIN; or one or more third identifiers of one or more PINEs in the PIN.

In some embodiments, the method includes: sending a first response to the first network element, in which, the first response is used to indicate whether the PIN policy data is successfully configured.

In some embodiments, the method further includes: sending a first notification to a fifth network element, in which, the first notification includes updated PIN policy data.

In some embodiments, the first network element is a NEF; and/or, the fourth network element is a UDR.

In some embodiments, the fifth network element is a PCF.

The above embodiments may be implemented independently or in combination with each other. For optional implementations, reference can be made to the optional implementations of the steps in FIG. 3 and FIG. 7a, and details will not be described here.

FIG. 7c is a flowchart of an information processing method according to an embodiment of the present disclosure. As shown in FIG. 7c, the embodiment of the present disclosure relates to an information processing method. The method is performed by a fourth network element and includes the following step.

At step S7301, a first response is sent.

For the optional implementation of step S7301, reference can be made to the optional implementation of step S3105 in FIG. 3 or the optional implementation of step S7102 in FIG. 7a and other associated parts in the embodiment involved in FIG. 3 and FIG. 7a, and details are not be described here.

In the embodiment of the present disclosure, step S7301 may be combined with at least one of step S7101 and step S7103 in FIG. 7a.

FIG. 7d is a flowchart of an information processing method according to an embodiment of the present disclosure. As shown in FIG. 7d, the embodiment of the present disclosure relates to an information processing method. The method is performed by a fourth network element and includes the following step.

At step S7401, a first notification is sent.

For the optional implementation of step S7401, reference can be made to the optional implementation of step S3106 in FIG. 3 or the optional implementation of step S7103 in FIG. 7a and other associated parts in the embodiment involved in FIG. 3 and FIG. 7a, and details are not be described here.

In the embodiment of the present disclosure, step S7401 may be combined with at least one of step S7101 and step S7102 in FIG. 7a.

FIG. 8a is a flowchart of an information processing method according to an embodiment of the present disclosure. As shown in FIG. 8a, the embodiment of the present disclosure relates to an information processing method. The method is performed by a fifth network element and includes the following step.

At step S8101, a first notification is obtained.

For the optional implementation of step S8101, reference can be made to the optional implementation of step S3106 in FIG. 3 and other associated parts in the embodiment involved in FIG. 3, and details are not be described here.

In some embodiments, the fifth network element receives the first notification sent by a fourth network element, but is not limited thereto, and may also receive the first notification sent by other entities.

In some embodiments, the fifth network element obtains the first notification specified by a protocol.

In some embodiments, the fifth network element obtains the first notification from an upper layer(s).

In some embodiments, the fifth network element performs processing to obtain the first notification.

In some embodiments, step S8101 may be omitted. The fifth network element may autonomously implement the function indicated by the first notification, or the above function may be null or default.

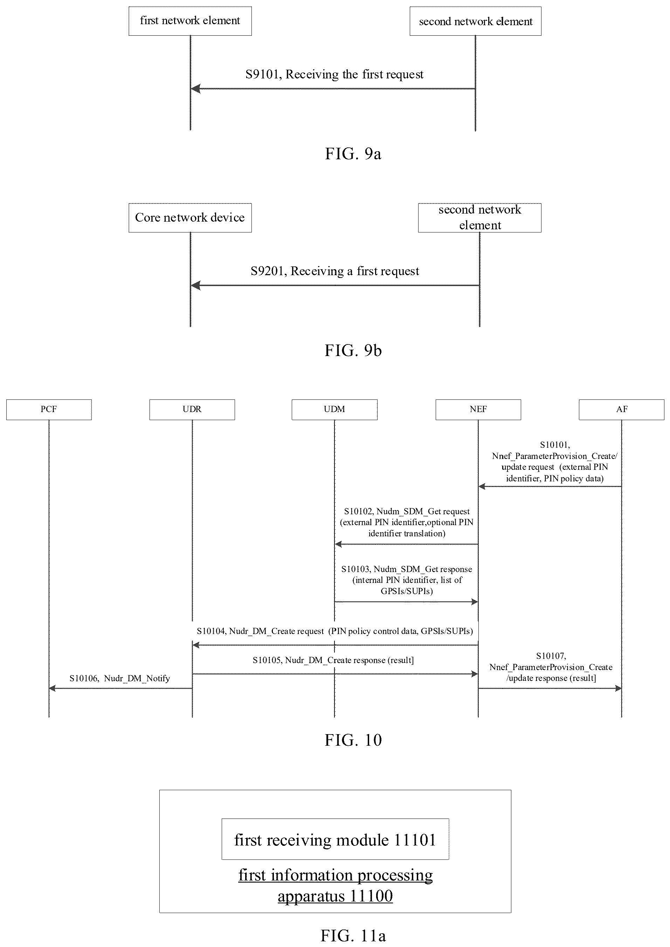

FIG. 9a is a flowchart of an information processing method according to an embodiment of the present disclosure. As shown in FIG. 9a, the embodiment of the present disclosure relates to an information processing method. The method is performed by an information processing system and includes the following steps.

At step S9101, a first network element receives a first request sent by a second network element.

In some embodiments, the first network element sends a second request to a third network element; and the first network element receives a second response sent by the third network element.

In some embodiments, the first network element sends a third request to the fourth network element; the first network element receives a first response sent by the fourth network element; and the first network element sends a third response to the second network element.

For the optional implementation of step S9101, reference can be made to the optional implementation of step S3101 in FIG. 3 or the optional implementation of step S4101 in FIG. 4a, and other associated parts in the embodiment involved in FIG. 3 and FIG. 4a, and details are not be described here.

In some embodiments, the above method may include the method described in the embodiments of the above information processing system 100, the first network element side, the second network element side, the third network element side, the fourth network element side, the fifth network element side, etc., and details will not be repeated herein.

FIG. 9b is a flowchart of an information processing method according to an embodiment of the present disclosure. As shown in FIG. 9b, the embodiment of the present disclosure relates to an information processing method. The method is performed by a core network device, and the core network device includes: a first network element, a third network element, a fourth network element and a fifth network element. The method includes the following step.

At step S9201, the core network device receives a first request sent by a second network element.

In some embodiments, the core network device sends a third response to the second network element.

For the optional implementation of step S9201, reference can be made to the optional implementation of step S3101 in FIG. 3 or the optional implementation of step S4101 in FIG. 4a, and other associated parts in the embodiment involved in FIG. 3 and FIG. 4a, and details are not be described here.

In some embodiments, the above method may include the method described in the above embodiments of the core network device side, the second network element side, etc., and details will not be repeated herein.

FIG. 10 is a flowchart of an information processing method according to an embodiment of the present disclosure. As shown in FIG. 10, the embodiment of the present disclosure relates to an information processing method, and the method includes the following steps.

At step S10101, Nnef_ParameterProvision_Create request or Nnef_ParameterProvision_Update request (external PIN identifier, PIN policy data). In an example, an AF decides to provide PIN policy data to a UDR by invoking the Nnef_ParameterProvision_Create request or the Nnef_ParameterProvision_Update request, including the external PIN identifier, the PIN policy data.

In an example, the external PIN identifier is unique within an AF domain.

In an example, the PIN policy data includes a routing rule, a QoS parameter, etc.

At step S10102, Nudm_SDM_Get request (external PIN identifier, optional PIN identifier translation). In an example, a NEF invokes the Nudm_SDM_Get request to the UDM, including the external PIN identifier and optional PIN identifier translation. In order to obtain a GPSI of a PEGC and/or a PEMC and/or a PINE of a requested PIN, or an optional internal PIN code identifier, corresponding to the external PIN identifier.

At step S10103, Nudm_SDM_Get response (internal PIN identifier, list of GPSIs or SUPIs). In an example, the UDM invokes the Nudm_SDM_Get response to the NEF, including: list of GPSIs or SUPIs of the PEGC or the PEMC or the PINE, and the optional internal PIN identifier.

At step S10104, Nudr_DM_Create request (PIN policy control data, GPSIs or SUPIs). In an example, the NEF invokes the Nudr_DM_Create request to the UDR, including: PIN policy control data, and the GPSIs or the SUPIs of the PEGC or the PEMCs or the PINE.

At step S10105, Nudr_DM_Create response (result). In an example, the NEF invokes the Nudr_DM_Create respond to the NEF, including the result (failure or success).

At step S10106, Nudr_DM_Notify. In an example, when the policy data is updated, it will notify the PCF with updated data, if the PCF subscribes to this change. In an example, the policy data may be the PIN policy data in the previous embodiment; the updated data may be the updated PIN policy data in the previous embodiment.

At step S10107, Nnef_ParameterProvision_Create/update response. In an example, the NEF invokes the Nnef_ParameterProvision_Create response or the Nnef-ParameterProvision_Update response to the AF, including the result.

In an example, the PIN policy control data is the PIN policy data in the previous embodiment. The result is a result indicated by the second information or the third information in the previous embodiment. The Nnef_ParameterProvision_Create request or the Nnef_ParameterProvision_Update request may be the first request in the previous embodiment; the Nudm_SDM_Get request may be the second request in the previous embodiment; the Nudm_SDM_Get response may be the second response in the previous embodiment; the Nudr_DM_Create request may be the third request in the previous embodiment; the Nudr_DM_Create response may be the first response in the previous embodiment; the Nudr_DM_Notify may be the first notification in the previous embodiment; and the Nnef_ParameterProvision_Create/update response may be the third response in the previous embodiment.

In the embodiment of the present disclosure, part or all of the steps and their optional implementations may be arbitrarily combined with part or all of the steps in other embodiments, and may also be arbitrarily combined with optional implementations of other embodiments.

The embodiments of the present disclosure also propose an apparatus for implementing any of the above methods, for example, an apparatus is proposed, the above apparatus includes units for implementing various steps performed by the terminal in any of the above methods. For another example, an apparatus is proposed, including units for implementing various steps performed by a network device in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 11a is a structural schematic diagram of a first information processing apparatus provided by an embodiment of the disclosure. As shown in FIG. 11a, the first information processing apparatus 11100 includes a first receiving module 11101, configured to receive a first request sent by a second network element. Optionally, the above first receiving module 11101 is used to execute the steps related to receiving performed by the first network element in any of the above methods, and details will not be repeated here. In an example, the first information processing apparatus 11100 includes a first sending module, the above first sending module is used to execute the steps related to sending performed by the first network element in any of the above methods, and details will not be repeated here.

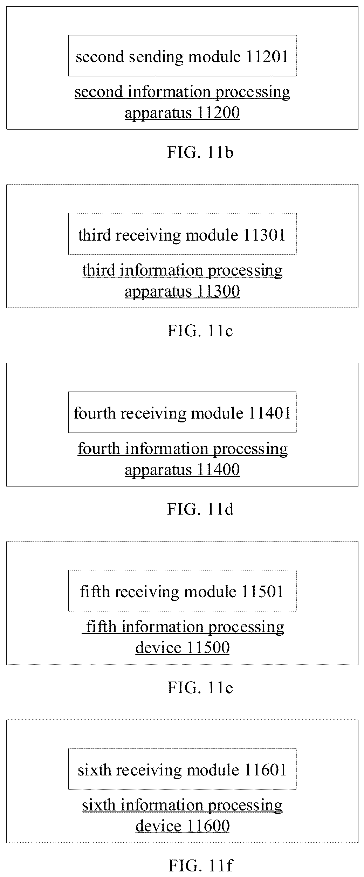

FIG. 11b is a structural schematic diagram of a second information processing apparatus provided by an embodiment of the disclosure. As shown in FIG. 11b, the second information processing apparatus 11200 includes a second sending module 11201, configured to send a first request to a first network element. Optionally, the above second sending module 11201 is used to execute the steps related to sending performed by the second network element in any of the above methods, and details will not be repeated here. In an example, the second information processing apparatus 11200 includes a second receiving module, the above second receiving module is used to execute the steps related to receiving performed by the second network element in any of the above methods, and details will not be repeated here.

FIG. 11c is a structural schematic diagram of a third information processing apparatus provided by an embodiment of the disclosure. As shown in FIG. 11c, the third information processing apparatus 11300 includes: a third receiving module 11301, configured to receive a second request sent by a first network element. Optionally, the third receiving module 11301 is used to execute the steps related to receiving performed by the third network element in any of the above methods, and details will not be repeated here. Optionally, the third information processing apparatus 11300 also includes a third sending module, the third sending module is used to execute the steps related to sending performed by the third network element in any of the above methods, and details will not be repeated here.

FIG. 11d is a structural schematic diagram of a fourth information processing apparatus provided by an embodiment of the disclosure. As shown in FIG. 11d, the fourth information processing apparatus 11400 includes: a fourth receiving module 11401, configured to receive a third request sent by a first network element. Optionally, the fourth receiving module 11401 is used to execute the steps related to receiving performed by the fourth network element in any of the above methods, and details will not be repeated here. Optionally, the fourth information processing apparatus 11400 also includes a fourth sending module, and the fourth sending module is used to execute the steps related to sending performed by the fourth network element in any of the above methods, and details will not be repeated here.

FIG. 11e is a structural schematic diagram of a fifth information processing apparatus provided by an embodiment of the disclosure. As shown in FIG. 11e, the fifth information processing device 11500 includes: a fifth receiving module 11501, configured to receive a first notification sent by a fourth network element. Optionally, the fifth receiving module 11501 is used to execute the steps related to receiving performed by the fifth network element in any of the above methods, and details will not be repeated here. Optionally, the fifth information processing apparatus 11500 also includes a fifth sending module, and the fifth sending module is used to execute the steps related to sending performed by the fifth network element in any of the above methods, and details will not be repeated here.

FIG. 11f is a structural schematic diagram of a sixth information processing apparatus provided by an embodiment of the disclosure. As shown in FIG. 11f, the sixth information processing apparatus 11600 includes: a sixth receiving module 11601, configured to receive a first request sent by a second network element. Optionally, the sixth receiving module 11601 is used to execute the steps related to receiving performed by the core network device in any of the above methods, and details will not be repeated here. Optionally, the sixth information processing apparatus 11600 also includes a sixth sending module, and the sixth sending module is used to execute the steps related to sending performed by the core network device in any of the above methods, and details will not be repeated here.

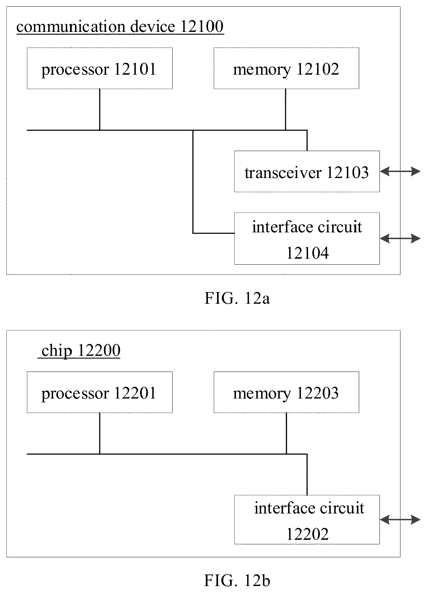

FIG. 12a is a schematic diagram of a communication device 12100 proposed in an embodiment of the present disclosure. The communication device 12100 may be a network device (e.g., a first network element, a second network element, a third network element, a fourth network element, and/or a fifth network element, etc.), or a terminal, or a chip, a chip system, or a processor that supports a network device to implement any of the above methods, or a chip, a chip system, or a processor that supports a terminal to implement any of the above methods. The communication device 12100 may be used to implement the method described in the above method embodiments, and for details, reference may be made to the description in the above method embodiments.

As shown in FIG. 12a, the communication device 12100 includes one or more processors 12101. The processor 12101 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 12101 is used to call instructions so that the communication device 12100 executes any of the above methods.

In some embodiments, the communication device 12100 further includes one or more memories 12102 for storing instructions. Optionally, all or part of the memory 12102 may be outside the communication device 12100.

In some embodiments, the communication device 12100 further includes one or more transceivers 12103. When the communication device 12100 includes one or more transceivers 12103, the communication steps such as sending and receiving in the above methods are performed by the transceiver 12103, and the other steps are performed by the processor 12101.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 12100 further includes one or more interface circuits 12104, which are connected to the memory 12102. The interface circuit 12104 may be used to receive signals from the memory 12102 or other apparatuses, and may be used to send signals to the memory 12102 or other apparatuses. For example, the interface circuit 12104 may read instructions stored in the memory 12102 and send the instructions to the processor 12101.

The communication device 12100 described in the above embodiments may be a network device or a terminal, but the scope of the communication device 12100 described in the present disclosure is not limited thereto, and the structure of the communication device 12100 may not be limited by FIG. 12a. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (12) others, etc.

FIG. 12b is a schematic diagram of a chip 12200 proposed in an embodiment of the present disclosure. In case where the communication device 12100 may be a chip or a chip system, reference may be made to the schematic diagram of the chip 12200 shown in FIG. 12b, but the present disclosure is not limited thereto.

The chip 12200 includes one or more processors 12201, and the processor 12201 is used to call instructions so that the chip 12200 executes any of the above methods.

In some embodiments, the chip 12200 further includes one or more interface circuits 12202, which are connected to the memory 12203. The interface circuit 12202 may be used to receive signals from the memory 12203 or other apparatuses, and the interface circuit 12202 may be used to send signals to the memory 12203 or other apparatuses. For example, the interface circuit 12202 may read instructions stored in the memory 12203 and send the instructions to the processor 12201. Optionally, the terms such as "interface circuit", "interface", "transceiver pin", and "transceiver" may be exchangeable with each other.

In some embodiments, the chip 12200 further includes one or more memories 12203 for storing instructions. Optionally, all or part of the memory 12203 may be outside the chip 12200.

The present disclosure also proposes a storage medium, on which instructions are stored, and when the instructions are executed on the communication device 12100, the communication device 12100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

## Claims

1. An information processing method, performed by a first network element, comprising:
receiving a first request sent by a second network element, wherein the first request comprises a first identifier of a personal Internet of Things network (PIN) and PIN policy data.

2. The method according to claim 1, wherein the PIN policy data comprises at least one of:
a routing rule;
a PIN identifier policy;
a privacy policy; or
a quality of service (QoS) parameter.

3. The method according to claim 1 or 2, comprising:
sending a second request to a third network element, wherein the second request comprises the first identifier of the PIN, and the second request is used to request a second identifier of the PIN.

4. The method according to claim 3, wherein the second request comprises first information, and the first information is used to indicate determining the second identifier corresponding to the first identifier.

5. The method according to claim 3 or 4, comprising:
receiving a second response sent by the third network element, wherein the second response comprises the second identifier.

6. The method according to claim 5, wherein the second response further comprises at least one of:
one or more third identifiers of one or more PIN elements with gateway capability (PEGC) in the PIN;
one or more third identifiers of one or more PIN elements with management capability (PEMC) in the PIN; or
one or more third identifiers of one or more PIN elements (PINE) in the PIN.

7. The method according to claim 6, wherein the third identifier comprises at least one of:
a generic public subscription identifier (GPSI); or
a subscriber permanent identifier (SUPI).

8. The method according to any one of claims 5 to 7, comprising:
sending a third request to a fourth network element, wherein the third request comprises at least one of:
the PIN policy data;
a third identifier; or
PIN policy data corresponding to the third identifier.

9. The method according to claim 8, wherein the method comprises one of:
receiving a first response sent by the fourth network element, wherein the first response is used to indicate whether the PIN policy data is successfully configured; or
sending a third response to the second network element, wherein the third response is used to indicate whether the PIN policy data is successfully configured.

10. The method according to any one of claims 1 to 9, wherein the first network element is a network exposure function (NEF); and/or the second network element is an application function (AF).

11. The method according to any one of claims 3 to 9, wherein the third network element is a unified data management (UDM).

12. The method according to any one of claims 7 to 9, wherein the fourth network element is a unified data repository (UDR).

13. An information processing method, performed by a second network element, comprising: sending a first request to a first network element, wherein the first request comprises a first identifier of a personal Internet of Things network (PIN) and PIN policy data.

14. The method according to claim 13, wherein the PIN policy data comprises at least one of:
a routing rule;
a PIN identifier policy;
a privacy policy; or
a quality of service (QoS) parameter.

15. The method according to claim 13 or 14, comprising:
receiving a third response sent by the first network element, wherein the third response is used to indicate whether the PIN policy data is successfully configured.

16. An information processing method, performed by a third network element, comprising:
receiving a second request sent by a first network element, wherein the second request comprises a first identifier of a personal Internet of Things network (PIN); and the second request is used to request a second identifier of the PIN.

17. The method according to claim 16, wherein the second request comprises first information, and the first information is used to indicate determining the second identifier corresponding to the first identifier.

18. The method according to claim 16 or 17, comprising:
sending a second response to the first network element, wherein the second response comprises the second identifier.

19. The method according to claim 18, wherein the second response further comprises at least one of:
one or more third identifiers of one or more PIN elements with gateway capability (PEGC) in the PIN;
one or more third identifiers of one or more PIN elements with management capability (PEMC) in the PIN; or
one or more third identifiers of one or more PIN elements (PINE) in the PIN.

20. An information processing method, performed by a fourth network element, comprising:
receiving a third request sent by a first network element, wherein the third request comprises at least one of:
PIN policy data;
a third identifier; or
PIN policy data corresponding to the third identifier.

21. The method according to claim 20, wherein the third identifier is at least one of:
one or more third identifiers of one or more PIN elements with gateway capability (PEGC) in the PIN;
one or more third identifiers of one or more PIN elements with management capability (PEMC) in the PIN; or
one or more third identifiers of one or more PIN elements (PINE) in the PIN.

22. The method according to claim 20 or 21, wherein the method comprises at least one of:
sending a first response to the first network element, wherein the first response is used to indicate whether the PIN policy data is successfully configured; or
sending a first notification to a fifth network element, wherein the first notification comprises updated PIN policy data.

23. The method according to claim 22, wherein the fifth network element is a policy control function (PCF).

24. An information processing method, performed by an information processing system, comprising a first network element and a second network element, and wherein the method comprises:
sending, by the second network element, a first request to the first network element, wherein the first request comprises a first identifier of a personal Internet of Things network (PIN) and PIN policy data.

25. The method according to claim 24, wherein the information processing system further comprises a third network element, and the method comprises:
sending, by the first network element, a second request to the third network element, wherein the second request comprises the first identifier of the PIN, and the first request is used to request a second identifier of the PIN; and
receiving, by the first network element, a second response sent by the third network element, wherein the second response comprises the second identifier.

26. An information processing method, performed by a core network device, comprising:
receiving a first request sent by a second network element, wherein the first request comprises a first identifier of a personal Internet of Things network (PIN) and PIN policy data.

27. The method according to claim 26, comprising:
sending a third response to the second network element, wherein the third response is used to indicate whether the PIN policy data is successfully configured.

28. A first information processing apparatus, comprising:
a first receiving module, configured to receive a first request sent by a second network element, wherein the first request comprises a first identifier of an Internet of Things network (PIN) and PIN policy data.

29. A second information processing apparatus, comprising:
a second sending module, configured to send a first request to a first network element, wherein the first request comprises a first identifier of an Internet of Things network (PIN) and PIN policy data.

30. A third information processing apparatus, comprising:
a third receiving module, configured to receive a second request sent by a first network element, wherein the second request includes a first identifier of an Internet of Things network PIN, and the second request is used to request a second identifier of the PIN.

31. A fourth information processing apparatus, comprising:
a fourth receiving module, configured to receive a third request sent by a first network element, wherein the third request comprises at least one of:
PIN policy data;
a third identifier; or
PIN policy data corresponding to the third identifier.

32. A communication device, comprising:
one or more processors;
wherein the processor is configured to call computer instructions to cause the communication device to perform the information processing method according to any one of claims 1 to 12, or claims 13 to 15, or claims 16 to 19, or claims 20 to 23, or claims 24 to 25, or claims 26 to 27.

33. An information processing system, comprising: a first network element, a second network element, a third network element and a fourth network element; wherein the first network element is configured to implement the information processing method according to any one of claims 1 to 12, the second network element is configured to implement the information processing method according to any one of claims 13 to 15, the third network element is configured to implement the information processing method according to any one of claims 16 to 19, and the fourth network element is configured to implement the information processing method according to any one of claims 20 to 23.

34. A storage medium storing instructions that, when executed on a communication device, cause the communication device to perform the information processing method according to any one of claims 1 to 12, or claims 13 to 15, or claims 16 to 19, or claims 20 to 23, or claims 24 to 25, or claims 26 to 27.
